# EUROPÄISCHE PATENTANMELDUNG

(11) **EP 3 130 514 A1**
(43) Veröffentlichungstag der Anmeldung: **15.02.2017**
(21) Anmeldenummer: 16183748.9
(22) Anmeldetag: 11.08.2016
(51) Int. Cl.: B60R 19/48, G01S 7/521, G01S 15/93

(54) **VERKLEIDUNGSANORDNUNG FÜR EIN KRAFTFAHRZEUG MIT EINEM DURCHGANGSÖFFNUNGEN AUFWEISENDEN VERKLEIDUNGSTEIL, KRAFTFAHRZEUG SOWIE VERFAHREN**

(30) Priorität: 11.08.2015 DE 102015113195
(71) Anmelder: Valeo Schalter und Sensoren GmbH, 74321 Bietigheim-Bissingen (DE)
(72) Erfinder: Rostocki, Paul-David, 74321 Bietigheim-Bissingen (DE); Gotzig, Heinreich, 74321 Bietigheim-Bissingen (DE)
(74) Vertreter: Hofstetter, Schurack & Partner

(57) **Zusammenfassung**

Die Erfindung betrifft eine Verkleidungsanordnung (9) für ein Kraftfahrzeug (1), mit einem Verkleidungsteil (10) und mit einem Ultraschallsensor (4), der mit dem Verkleidungsteil (10) verbunden ist, wobei der Ultraschallsensor (4) dazu ausgelegt ist, ein Ultraschallsignal durch das Verkleidungsteil (10) hindurch auszusenden und/oder ein Ultraschallsignal durch das Verkleidungsteil (10) hindurch zu empfangen und wobei das Verkleidungsteil (10) eine Dämpfungseinrichtung (16) zum Dämpfen einer Schwingung des Verkleidungsteils (10) aufweist, wobei die Dämpfungseinrichtung (16) eine Mehrzahl von Durchgangsöffnungen (18) umfasst, welche entlang eines Linienzugs angeordnet sind und welche das Verkleidungsteil (10) in einen ersten Bereich (19), in welchem der Ultraschallsensor (4) angeordnet ist, und einen den ersten Bereich (19) umgebenden zweiten Bereich (20) einteilt.

## Beschreibung

Die vorliegende Erfindung betrifft eine Verkleidungsanordnung für ein Kraftfahrzeug mit einem Verkleidungsteil und mit einem Ultraschallsensor, der mit dem Verkleidungsteil verbunden ist, wobei der Ultraschallsensor dazu ausgelegt ist, ein Ultraschallsignal durch das Verkleidungsteil hindurch auszusenden und/oder ein Ultraschallsignal durch das Verkleidungsteil hindurch zu empfangen und wobei das Verkleidungsteil eine Dämpfungseinrichtung zum Dämpfen einer Schwingung des Verkleidungsteils aufweist. Darüber hinaus betrifft die vorliegende Erfindung ein Kraftfahrzeug mit einer solchen Verkleidungsanordnung. Schließlich betrifft die vorliegende Erfindung ein Verfahren zum Herstellen einer Verkleidungsanordnung für ein Kraftfahrzeug.

Ultraschallsensoren sind bereits aus dem Stand der Technik bekannt. Diese werden beispielsweise in Fahrerassistenzsystemen, insbesondere in sogenannten Parkhilfesystemen, eingesetzt, um den Fahrer beim Einparken des Kraftfahrzeugs zu unterstützen. Die Ultraschallsensoren messen dabei die Abstände zwischen dem Kraftfahrzeug einerseits und den in seiner Umgebung befindlichen Hindernissen andererseits. Mittels einer Membran wird ein Ultraschallsignal ausgesendet, welches dann von dem Hindernis in der Umgebung des Kraftfahrzeugs reflektiert wird und wieder zu dem Ultraschallsensor gelangt, und zwar in Form eines Echos. Dieses Ultraschallsignal wird mit Hilfe der Membran empfangen. Zum Aussenden des Ultraschallsignals wird die Membran mittels eines piezoelektrischen Elements angeregt. Wenn umgekehrt die Membran durch das empfangene Ultraschallsignal angeregt wird, erzeugt das ebenfalls angeregte Piezoelement ein elektrisches Signal, welches im Hinblick auf die zu detektierenden Abstände ausgewertet werden kann. Dabei erfolgt die Abstandsmessung in Abhängigkeit von der Laufzeit des ausgesendeten Ultraschallsignals.

Vorliegend richtet sich das Interesse insbesondere auf sogenannte verdeckt verbaute Ultraschallsensoren. Hierbei sind die Ultraschallsensoren aus Designgründen hinter einem Verkleidungsteil, beispielsweise einem Stoßfänger, des Kraftfahrzeugs angeordnet. In diesem Fall sind die Ultraschallsensoren für einen Betrachter, der vor dem Kraftfahrzeug steht, von außen nicht sichtbar. Bei den verdeckt verbauten Ultraschallsensoren wird die Membran der Ultraschallsensoren üblicherweise an eine Rückseite des Verkleidungsteils geklebt. In diesem Fall wird das Ultraschallsignal durch das Verkleidungsteil hindurch ausgesendet und das von dem Hindernis reflektierte Ultraschallsignal wird durch das Verkleidungsteil hindurch empfangen. Hierdurch ergibt sich allerdings der Nachteil, dass sich infolge des ausgesendeten Ultraschallsignals Körperschall von dem Ultraschallsensor sehr gut entlang des kompletten Verkleidungsteils ausbreitet. Um dies zu verhindern, werden üblicherweise Dämpfungseinrichtungen um den Sensor herum angeordnet. Diese Dämpfungseinrichtungen können beispielsweise aus einem dämpfenden Material gebildet sein und dazu dienen, die Ausbreitung von Körperschall zu verhindern. Die Dämpfungseinrichtung kann beispielsweise einen Entkopplungsring aufweisen, der aus einer Keramik, einem Metall, einem Kunststoff oder dergleichen gefertigt sein. Durch den Entkopplungsring entstehen aber zusätzliche Kosten und Gewicht. Außerdem können sich durch den Entkopplungsring Abdrücke ausbilden, die auf dem Verkleidungsteil von außen sichtbar sind.

Hierzu beschreibt die DE 10 2006 035 607 A1 eine Sensorbefestigungsstruktur mit einem Schallempfangselement, welches Ultraschall empfängt, und einem Ultraschallsensor, welcher an dem Schallempfangselement befestigt ist. Das Schallempfangselement kann beispielsweise ein Stoßfänger eines Kraftfahrzeugs sein. Dabei kann ein Graben vorgesehen sein, der die Form einer rechtwinkligen Schleife aufweist und der ein Gebiet einer Sensorbefestigungsoberfläche umgibt, an welcher der Ultraschallsensor befestigt ist.

Weiterhin ist aus der DE 10 2006 044 656 A1 eine Befestigungskonstruktion für Ultraschallsensoren bekannt. Die Befestigungskonstruktion umfasst einen Ultraschallsensor und ein Wandelelement, an dem der Ultraschallsensor befestigt wird. Der Ultraschallsensor schließt einen Ultraschallwandler und eine schwingende Oberfläche ein. Eine Innenfläche des Wandelelements weist einen Befestigungsabschnitt auf, an dem der Ultraschallsensor befestigt wird, einen Kontaktabschnitt, mit dem der Ultraschallsensor in Kontakt steht, und einen Abschnitt mit einer Positionsmarkierung, die die Position des Befestigungsabschnitts anzeigt.

Ferner ist in der DE 10 2006 038 598 A1 eine Vorrichtung zur Ultraschallerzeugung beschrieben, die einen piezoelektrischen Wandler aufweist, der an eine dünnwandige Rückseite eines Außenverkleidungselements zur Abstrahlung in einen Außenrand mechanisch gekoppelt ist. Hierbei kann es vorgesehen sein, dass eine strukturierte Rückseite des Außenverkleidungselements durch Stufen, die insbesondere unterschiedliche Tiefen aufweisen, zur Fokussierung und/oder Formung einer ausgesendeten Schallkeule ausgebildet ist.

Es ist Aufgabe der vorliegenden Erfindung, eine Lösung aufzuzeigen, wie eine Verkleidungsanordnung für ein Kraftfahrzeug, die ein Verkleidungsteil und einen Ultraschallsensor umfasst, effizienter betrieben werden kann und zugleich kostengünstiger bereitgestellt werden kann.

Diese Aufgabe wird erfindungsgemäß durch eine Verkleidungsanordnung, durch ein Kraftfahrzeug sowie durch ein Verfahren mit den Merkmalen gemäß den jeweiligen unabhängigen Ansprüchen gelöst. Vorteilhafte Ausführungen der Erfindung sind Gegenstand der abhängigen Ansprüche, der Beschreibung und der Figuren.

Eine erfindungsgemäße Verkleidungsanordnung für ein Kraftfahrzeug umfasst ein Verkleidungsteil und einen Ultraschallsensor, der mit dem Verkleidungsteil verbunden ist. Dabei ist der Ultraschallsensor dazu ausgelegt, ein Ultraschallsignal durch das Verkleidungsteil hindurch auszusenden und/oder ein Ultraschallsignal durch das Verkleidungsteil hindurch zu empfangen. Zudem weist das Verkleidungsteil eine Dämpfungseinrichtung zum Dämpfen einer Schwingung des Verkleidungsteils auf. Die Dämpfungseinrichtung umfasst eine Mehrzahl von Durchgangsöffnungen, welche entlang eines Linienzugs angeordnet sind und welche das Verkleidungsteil in einen ersten Bereich, in welchem der Ultraschallsensor angeordnet ist, und einen dem ersten Bereich umgebenden zweiten Bereich einteilt.

Die Verkleidungsanordnung umfasst ein Verkleidungsteil und einen Ultraschallsensor, der in der bestimmungsgemäßen Einbaulage der Verkleidungsanordnung verdeckt hinter dem Verkleidungsteil angeordnet ist. Das Verkleidungsteil kann ein Außenverkleidungsteil des Kraftfahrzeugs, insbesondere ein Stoßfänger, sein. Der Ultraschallsensor kann auf einer Rückseite des Verkleidungsteils angeordnet sein. Beispielsweise kann eine Membran des Ultraschallsensors stoffschlüssig, beispielsweise mittels einer Klebeverbindung, mit dem Verkleidungsteil verbunden sein. Der Ultraschallsensor kann zudem ein Wandlerelement, insbesondere ein piezoelektrisches Element, umfassen, welches auf einer einer Aussendefläche der Membran gegenüberliegenden Seite angeordnet ist. Das piezoelektrische Element kann insbesondere mittels einer Klebeverbindung stoffschlüssig mit der Membran verbunden sein. An das piezoelektrische Element kann eine elektrische Spannung, insbesondere eine zeitlich veränderliche elektrische Spannung, angelegt werden. Daraufhin werden die Membran und das Verkleidungsteil, das mit der Membran verbunden ist, zu mechanischen Schwingungen angeregt, sodass das Ultraschallsignal ausgesendet wird. Das Ultraschallsignal kann auf ein Hindernis beziehungsweise Objekt in der Umgebung des Kraftfahrzeugs treffen und von diesem reflektiert werden. Das reflektierte Ultraschallsignal beziehungsweise das Echo trifft dann wiederum auf das Verkleidungsteil. Hierdurch werden das Verkleidungsteil und die Membran zu mechanischen Schwingungen angeregt. Infolge der mechanischen Schwingung erzeugt das piezoelektrische Element eine elektrische Spannung beziehungsweise ein elektrisches Signal, welches entsprechend ausgewertet werden kann.

Das Verkleidungsteil weist nun eine Mehrzahl von Durchgangsöffnungen auf, die entlang eines Linienzugs angeordnet sind. Hierbei kann es vorgesehen sein, dass die Mehrzahl von Durchgangsöffnungen entlang eines geschlossenen Linienzugs angeordnet ist. Ferner können die Durchgangsöffnungen entlang des geschlossenen Linienzugs nebeneinander angeordnet sein. Die Durchgangsöffnungen können auch entlang mehrerer Linienzüge verlaufen. Die Durchgangsöffnungen können den Ultraschallsensor zumindest bereichsweise umgeben. Die Durchgangsöffnungen schließen einen ersten Bereich des Verkleidungsteils ein, in beziehungsweise an dem der Ultraschallsensor angeordnet ist. Der zweite Bereich des Verkleidungsteils umgibt insbesondere den ersten Bereich. Dabei kann es auch vorgesehen sein, dass die Durchgangsöffnungen mehrere erste Bereiche einschließen. Durch die Mehrzahl von Durchgangsöffnungen können der erste Bereich und der zweite Bereich voneinander mechanisch entkoppelt werden. Somit kann beispielsweise erreicht werden, dass durch die Durchgangsöffnungen die Steifigkeit des Verkleidungsteils lokal reduziert wird. Dies hat insbesondere zur Folge, dass der erste Bereich im Vergleich zum zweiten Bereich mehr zu mechanischen Schwingungen angeregt wird. Damit kann verhindert werden, dass die mechanische Schwingung, die sich infolge des Aussendens des Ultraschallsignals ausbildet, entlang des Verkleidungsteils übertragen wird. Somit kann insbesondere auf einen Entkopplungsring verzichtet werden. Damit können Bauteile und Kosten eingespart werden.

Bevorzugt sind Abmessungen der jeweiligen Durchgangsöffnungen und/oder Abstände zwischen den Durchgangsöffnungen derart bestimmt, dass eine Übertragung von Körperschall, welcher sich infolge des Aussendens des Ultraschallsignals ausbildet, von dem ersten Bereich zu dem zweiten Bereich gedämpft wird. Die Durchgangsöffnungen können beispielsweise eine Querschnittsfläche aufweisen, die rund, elliptisch, rechteckig oder dreieckig ausgebildet ist. Die Abmessungen und/oder die Formgebung der Durchgangsöffnungen können so bestimmt sein, dass die Übertragung von Körperschall von dem ersten Bereich zu dem zweiten Bereich verringert wird. Alternativ oder zusätzlich können die Abstände zwischen den nebeneinander angeordneten Durchgangsöffnungen jeweils einen vorbestimmten Abstand aufweisen, sodass die Übertragung von Körperschall von dem ersten zu dem zweiten Bereich verringert wird. Je größer die Abmessungen und/oder je kleiner die Abstände zwischen den Durchgangsöffnungen sind, umso größer ist die mechanische Entkopplung zwischen dem ersten und dem zweiten Bereich. Der erste Bereich ist durch die Zwischenbereiche zwischen den Durchgangsöffnungen mit dem zweiten Bereich mechanisch verbunden. So kann beispielsweise erreicht werden, dass die mechanische Schwingung, die das Verkleidungsteil in dem ersten Bereich als eine Folge der Anregung durch den Ultraschallsensor durchführt, nur zu einem vorbestimmten Anteil an den zweiten Bereich übertragen wird. Damit kann zudem verhindert werden, dass die mechanische Schwingung von dem zweiten Bereich des Verkleidungsteils beispielsweise an einen weiteren Sensor übertragen wird und diesen in seiner Funktion negativ beeinflusst.

Weiterhin ist es vorteilhaft, wenn die Abmessungen der jeweiligen Durchgangsöffnungen und/oder Abstände zwischen den Durchgangsöffnungen derart bestimmt sind, dass der von dem ersten in den zweiten Bereich übertragene Körperschall destruktiv überlagert wird. Die Durchgangsöffnungen können derart ausgestaltet und zueinander angeordnet sein, dass der in dem ersten Bereich infolge der Anregung durch den Ultraschallsensor erzeugte Körperschall in den zweiten Bereich infolge von Wellenauslöschung zumindest gedämpft wird. Dabei können die Durchgangsöffnungen derart ausgestaltet sein, dass jeweilige Anteile des Körperschalls, die sich durch benachbarte Zwischenbereiche zwischen den Durchgangsöffnungen von dem ersten Bereich zu dem zweiten Bereich ausbreiten, derart gebeugt werden, dass sich diese gegenseitig auslöschen.

Durch die Abmessungen der jeweiligen Durchgangsöffnungen und/oder deren Abstände zueinander kann auch die Sende- und Empfangscharakteristik des Ultraschallsensors beeinflusst werden. Durch die Anordnung der Durchgangsöffnungen kann der erste Bereich, der bevorzugt durch die Membran zu mechanischen Schwingungen angeregt wird, definiert werden. Auf diese Weise kann die Abstrahlcharakteristik des Ultraschallsensors auf einfache Weise angepasst werden.

Weiterhin ist es vorteilhaft, wenn ein von der Membran des Ultraschallsensors bedeckter Bereich des Verkleidungsteils frei von Durchgangsöffnungen ist. Mit anderen Worten sind die Durchgangsöffnungen um die Membran des Ultraschallsensors herum umlaufend angeordnet. Die Membran beziehungsweise eine Aussendefläche der Membran kann beispielsweise auf die Rückseite des Verkleidungsteils geklebt sein. Auf diese Weise kann erreicht werden, dass der erste Bereich, der innerhalb der Durchgangsöffnungen liegt, zu mechanischen Schwingungen angeregt wird. Der zweite Bereich wird im Vergleich zum ersten Bereich weniger zu Schwingungen angeregt. Somit kann auf einfache und kostengünstige Weise eine mechanische Entkopplung des ersten Bereichs, der dem Ultraschallsensor beziehungsweise der Membran des Ultraschallsensors zugeordnet ist, und dem zweiten Bereich erreicht werden.

In einer Ausführungsform ist die Mehrzahl von Durchgangsöffnungen jeweils mit einem Dämpfungselement zum Dämpfen des Körperschalls befüllt. Mit anderen Worten können in den Durchgangsöffnungen jeweils ein Dämpfungsmaterial und/oder ein Füllmaterial angeordnet sein. Dieses Material dient insbesondere dazu, den Körperschall, der infolge der Anregung des Verkleidungsteils ausgebildet wird, zu dämpfen. Auf diese Weise kann zusätzlich eine Dämpfung des Körperschalls erreicht werden. Weiterhin ergibt sich somit eine geschlossene Oberfläche, die optisch nicht störend wirkt.

Weiterhin ist es vorteilhaft, wenn auf einer dem Ultraschallsensor gegenüberliegenden Außenseite des Verkleidungsteils eine Lackschicht aufgebracht ist. Die Außenseite beziehungsweise die Außenfläche des Verkleidungsteils ist in der bestimmungsgemäßen Einbaulage der Verkleidungsanordnung von außen sichtbar. Auf diese Außenseite kann eine Lackschicht beziehungsweise eine Lackierung aufgebracht sein. Dabei kann es auch vorgesehen sein, dass in die jeweiligen Durchgangsöffnungen das Dämpfungsmaterial eingebracht ist und dieses zusätzlich lackiert ist. Auf diese Weise kann ein verbessertes Design erreicht werden.

Bevorzugt ist der Linienzug, entlang dem die Durchgangsöffnungen angeordnet sind, geschlossen, wobei der geschlossene Linienzug eine Form eines Kreises, einer Ellipse oder eines Rechtecks aufweist. Durch die Formgebung des geschlossenen Linienzugs, entlang dem die Durchgangsöffnungen angeordnet sind, kann die Schwingungscharakteristik des Verkleidungsteils beziehungsweise des Verbunds aus Membran und Verkleidungsteil beeinflusst werden. Auf diese Weise kann die Sende- und/oder Empfangscharakteristik des Ultraschallsensors zudem beeinflusst werden.

In einer Ausführungsform ist das Verkleidungsteil aus einem Kunststoff und/oder einem Metall gebildet. Es kann auch vorgesehen sein, dass das Verkleidungsteil aus einem glasfaserverstärkten Kunststoff oder einem kohlefaserverstärkten Kunststoff gebildet ist. Das Verkleidungsteil kann ein Außenverkleidungsteil des Kraftfahrzeugs sein. Insbesondere ist das Verkleidungsteil ein Stoßfänger.

Ein erfindungsgemäßes Kraftfahrzeug umfasst eine erfindungsgemäße Verkleidungsanordnung. Das Kraftfahrzeug ist insbesondere als Personenkraftwagen ausgebildet.

Ein erfindungsgemäßes Verfahren dient zum Herstellen einer Verkleidungsanordnung für ein Kraftfahrzeug. Hierbei wird ein Verkleidungsteil bereitgestellt und ein Ultraschallsensor mit dem Verkleidungsteil verbunden, wobei der Ultraschallsensor dazu ausgelegt ist, ein Ultraschallsignal durch das Verkleidungsteil hindurch auszusenden und/oder das Ultraschallsignal durch das Verkleidungsteil hindurch zu empfangen. Zudem wird eine Dämpfungseinrichtung zum Dämpfen einer Schwingung des Verkleidungsteils bereitgestellt. Zum Bereitstellen der Dämpfungseinrichtung wird eine Mehrzahl von Durchgangsöffnungen in das Verkleidungsteil eingebracht, welche entlang eines Linienzugs angeordnet sind und welche das Verkleidungsteil in einen ersten Bereich, in welchem der Ultraschallsensor angeordnet ist, und einen den ersten Bereich umgebenden zweiten Bereich einteilt.

In einer Ausführungsform ist es vorgesehen, dass vor dem Einbringen der Mehrzahl von Durchgangsöffnungen eine Lackschicht auf eine dem Ultraschallsensor gegenüberliegende Außenseite des Verkleidungsteils aufgebracht wird. Hierbei kann zunächst das Verkleidungsteil an der Außenseite lackiert werden. Anschließend können die Durchgangsöffnungen durch die Lackschicht und das Verkleidungsteil hindurch eingebracht werden. Somit kann eine einfache Herstellung der Verkleidungsanordnung ermöglicht werden.

Gemäß einer weiteren Ausführungsform wird nach dem Einbringen der Mehrzahl von Durchgangsöffnungen eine Lackschicht auf eine dem Ultraschallsensor gegenüberliegende Außenseite des Verkleidungsteils aufgebracht. In diesem Fall werden zunächst die Durchgangsöffnungen im Verkleidungsteil eingebracht. Anschließend wird die Lackschicht auf die Außenseite des Verkleidungsteils aufgebracht. Dabei können die Durchgangsöffnungen derart ausgebildet sein, dass diese von der Lackschicht bedeckt und/oder aufgefüllt werden. Somit kann eine verbesserte Optik des Verkleidungsteils beziehungsweise der Verkleidungsanordnung erreicht werden.

Weiterhin ist es vorteilhaft, wenn die Mehrzahl von Durchgangsöffnungen mittels eines Lasers in das Verkleidungsteil eingebracht wird. Mit dem Laser kann beispielsweise ein Laserstrahl auf das Verkleidungsteil gerichtet werden, wodurch das Material des Verkleidungsteils lokal aufgeschmolzen und verdampft wird. Somit können Durchgangsöffnungen beliebiger Geometrien einfach und kostengünstig hergestellt werden.

Die mit Bezug auf die erfindungsgemäße Verkleidungsanordnung vorgestellten bevorzugten Ausführungsformen und deren Vorteile gelten entsprechend für das erfindungsgemäße Kraftfahrzeug sowie das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem mit einer Mehrzahl von Ultraschallsensoren umfasst;
- Fig. 2: eine Verkleidungsanordnung mit einem Ultraschallsensor und einem Verkleidungsteil gemäß dem Stand der Technik in einer geschnittenen Seitenansicht;
- Fig. 3: die Verkleidungsanordnung gemäß Fig. 2 in einer Draufsicht;
- Fig. 4: eine Verkleidungsanordnung mit einem Ultraschallsensor und einem Verkleidungsteil gemäß einer Ausführungsform der Erfindung in einer geschnittenen Seitenansicht; und
- Fig. 5: die Verkleidungsanordnung gemäß Fig. 2 in einer Draufsicht;

In den Figuren werden gleiche oder funktionsgleiche Elemente mit den gleichen Bezugszeichen versehen.

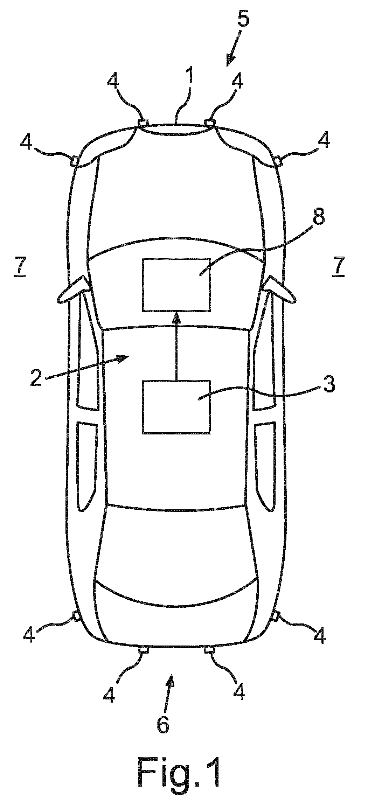

Fig. 1 zeigt ein Kraftfahrzeug 1 gemäß einer Ausführungsform der vorliegenden Erfindung. Das Kraftfahrzeug ist in dem vorliegenden Fall als Personenkraftwagen ausgebildet. Das Kraftfahrzeug 1 umfasst ein Fahrerassistenzsystem 2. Das Fahrerassistenzsystem 2 umfasst wiederum eine Steuereinrichtung 3, die beispielsweise durch ein elektronisches Steuergerät des Kraftfahrzeugs 1 gebildet sein kann. Darüber hinaus umfasst das Fahrerassistenzsystem 2 zumindest einen Ultraschallsensor 4.

In dem vorliegenden Ausführungsbeispiel umfasst das Fahrerassistenzsystem 2 acht Ultraschallsensoren 4. Dabei sind vier Ultraschallsensoren 4 in einem Frontbereich 5 des Kraftfahrzeugs 1 und vier Ultraschallsensoren 4 in einem Heckbereich 6 des Kraftfahrzeugs 1 angeordnet. Die Ultraschallsensoren 4 sind insbesondere dazu ausgebildet, ein Objekt beziehungsweise ein Hindernis in einem Umgebungsbereich 7 des Kraftfahrzeugs 1 zu erfassen. Des Weiteren können die Ultraschallsensoren 4 insbesondere dazu ausgelegt sein, einen Abstand zu dem Objekt in dem Umgebungsbereich 7 des Kraftfahrzeugs 1 zu bestimmen.

Darüber hinaus umfasst das Kraftfahrzeug 1 beziehungsweise das Fahrerassistenzsystem 2 eine Anzeigeeinrichtung 8, die als Bildschirm beziehungsweise als Display ausgebildet sein kann, und die in einem Innenraum des Kraftfahrzeugs 1 angeordnet ist. Die Steuereinrichtung 3 ist mit den Ultraschallsensoren 4 zur Datenübertragung verbunden. Entsprechende Datenleitungen sind vorliegend der Übersichtlichkeit halber nicht dargestellt. Darüber hinaus ist die Steuereinrichtung 3 mit der Anzeigeeinrichtung 8 zur Datenübertragung verbunden. Somit kann die Anzeige auf der Anzeigeeinrichtung 8 mittels der Steuereinrichtung 3 gesteuert werden.

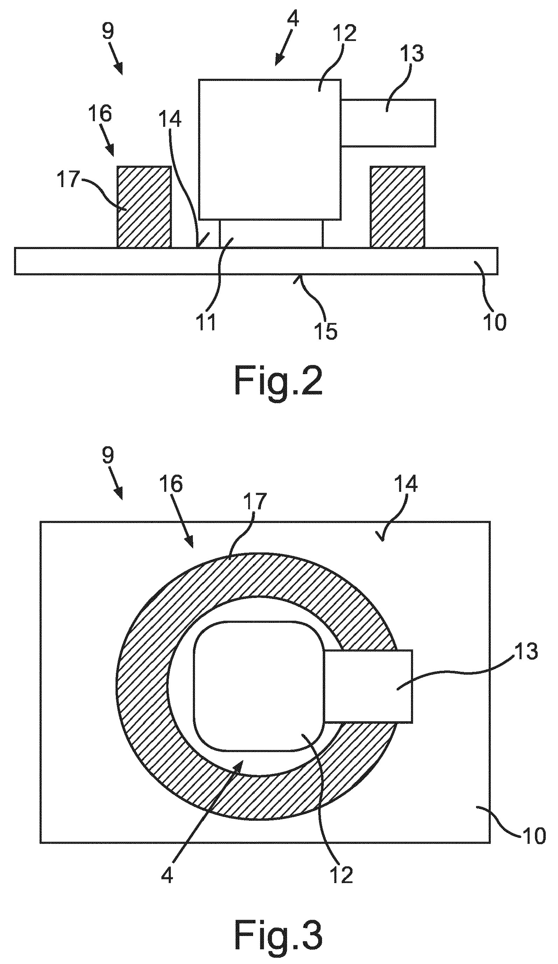

Die Ultraschallsensoren 4 sind vorliegend verdeckt hinter einem Verkleidungsteil 10 beziehungsweise dem jeweiligen Stoßfänger des Kraftfahrzeugs 1 angeordnet. Fig. 2 zeigt eine Verkleidungsanordnung 9 gemäß dem Stand der Technik in einer geschnittenen Seitenansicht. Die Verkleidungsanordnung 9 umfasst den Ultraschallsensor 4 sowie das Verkleidungsteil 10. Der Ultraschallsensor 4 umfasst eine Membran 11, die topfförmig ausgebildet ist und die beispielsweise aus Aluminium gefertigt ist. Ferner umfasst der Ultraschallsensor 4 ein Gehäuse 12 sowie ein Steckergehäuse 13. Die Membran 11 des Ultraschallsensors 4 ist stoffschlüssig mit einer Innenseite 14 des Verkleidungsteils 10 verbunden. Wenn die Membran 11 mit einem hier nicht dargestellten Wandlerelement, beispielsweise einem piezoelektrischen Element, zu mechanischen Schwingungen angeregt wird, wird zudem das Verkleidungsteil 10 zu mechanischen Schwingungen angeregt. Auf diese Weise kann das Ultraschallsignal ausgesendet werden. Wenn das Ultraschallsignal von dem Hindernis beziehungsweise dem Objekt reflektiert wird, trifft es wieder auf eine Außenseite 15 des Verkleidungsteils 10. Hierdurch wird das Verkleidungsteil 10 und die Membran 11 zu mechanischen Schwingungen angeregt. Diese mechanische Schwingung kann mit dem Wandlerelement beziehungsweise dem piezoelektrischen Element erfasst werden. Anhand der Laufzeit kann dann der Abstand zu dem Objekt bestimmt werden.

Um eine Ausbreitung von Körperschall, der sich infolge der Anregung des Verkleidungsteils 10 mit dem Ultraschallsensor 4 entlang des Verkleidungsteils 10 ausbreitet, zu reduzieren, weist die Verkleidungsanordnung 9 eine Dämpfungseinrichtung 16 auf. Vorliegend umfasst die Dämpfungseinrichtung 16 einen Entkopplungsring 17, der auf der Innenseite 14 des Verkleidungsteils 10 angeordnet ist. Aus Fig. 3, die eine Draufsicht einer Verkleidungsanordnung gemäß Fig. 2 zeigt, ist zu entnehmen, dass der Entkopplungsring 17 den Ultraschallsensor 4 umgibt. Der Entkopplungsring 17 kann beispielsweise aus einer Keramik oder einem dämpfenden Material gebildet sein.

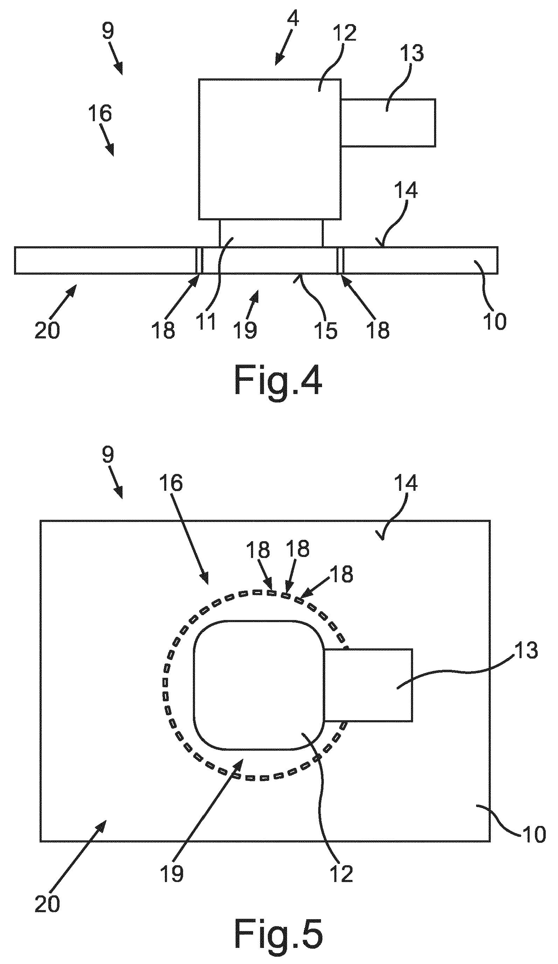

Fig. 4 zeigt eine Verkleidungsanordnung 9 gemäß einer Ausführungsform der vorliegenden Erfindung in einer geschnittenen Seitenansicht. Hier weist die Dämpfungseinrichtung 16 eine Mehrzahl von Durchgangsöffnungen 18 auf, die sich jeweils von der Außenseite 15 zu der Innenseite 14 des Verkleidungsteils erstrecken. Fig. 5 zeigt die Verkleidungsanordnung 9 gemäß Fig. 4 in einer Draufsicht. Hierbei ist insbesondere zu erkennen, dass die Durchgangsöffnungen 18 entlang eines Linienzugs angeordnet sind. Vorliegend sind die Durchgangsöffnungen 18 entlang eines geschlossenen kreisförmigen Linienzugs nebeneinander angeordnet. Durch die Durchgangsöffnungen 18 wird das Verkleidungsteil 10 in einen ersten Bereich 19 und einen zweiten Bereich 20 eingeteilt. Der erste Bereich 19 ist dem Ultraschallsensor 4 zugeordnet. In dem ersten Bereich 19 ist die Membran 11 des Ultraschallsensors 4 auf der Innenseite 14 des Verkleidungsteils 10 angeordnet. Somit kann erreicht werden, dass der erste Bereich 19 im Vergleich zum zweiten Bereich 20 mehr zu mechanischen Schwingungen infolge der Anregung durch die schwingende Membran 11 angeregt wird. Zudem kann verhindert werden, dass sich Körperschall infolge der Schwingung der Membran 11 von dem ersten Bereich 19 in den zweiten Bereich 20 überträgt. Somit kann auf den Entkopplungsring 17 verzichtet werden.

## Patentansprüche

1. Verkleidungsanordnung (9) für ein Kraftfahrzeug (1), mit einem Verkleidungsteil (10) und mit einem Ultraschallsensor (4), der mit dem Verkleidungsteil (10) verbunden ist, wobei der Ultraschallsensor (4) dazu ausgelegt ist, ein Ultraschallsignal durch das Verkleidungsteil (10) hindurch auszusenden und/oder ein Ultraschallsignal durch das Verkleidungsteil (10) hindurch zu empfangen und wobei das Verkleidungsteil (10) eine Dämpfungseinrichtung (16) zum Dämpfen einer Schwingung des Verkleidungsteils (10) aufweist,
**dadurch gekennzeichnet, dass**
die Dämpfungseinrichtung (16) eine Mehrzahl von Durchgangsöffnungen (18) umfasst, welche entlang eines Linienzugs angeordnet sind und welche das Verkleidungsteil (10) in einen ersten Bereich (19), in welchem der Ultraschallsensor (4) angeordnet ist, und einen den ersten Bereich (19) umgebenden zweiten Bereich (20) einteilt.

2. Verkleidungsanordnung (9) nach Anspruch 1,
**dadurch gekennzeichnet, dass**
Abmessungen der jeweiligen Durchgangsöffnungen (18) und/oder Abstände zwischen den Durchgangsöffnungen (18) derart bestimmt sind, dass eine Übertragung von Körperschall, welcher sich infolge des Aussendens des Ultraschallsignals ausbildet, von dem ersten Bereich (19) zu dem zweiten Bereich (20) gedämpft wird.

3. Verkleidungsanordnung (9) nach Anspruch 1 oder 2,
**dadurch gekennzeichnet, dass**
Abmessungen der jeweiligen Durchgangsöffnungen (18) und/oder Abstände zwischen den Durchgangsöffnungen (18) derart bestimmt sind, dass der von dem ersten Bereich (19) in den zweiten Bereich (20) übertragene Körperschall destruktiv überlagert wird.

4. Verkleidungsanordnung (9) nach einem der vorhergehenden Ansprüche,
**dadurch gekennzeichnet, dass**
ein von einer Membran (11) des Ultraschallsensors (4) bedeckter Bereich des Verkleidungsteils (10) frei von Durchgangsöffnungen (18) ist.

5. Verkleidungsanordnung (9) nach einem der vorhergehenden Ansprüche,
**dadurch gekennzeichnet, dass**
die Mehrzahl von Durchgangsöffnungen (18) jeweils mit einem Dämpfungselement zum Dämpfen des Körperschalls befüllt ist.

6. Verkleidungsanordnung (9) nach einem der vorhergehenden Ansprüche,
**dadurch gekennzeichnet, dass**
auf einer dem Ultraschallsensor (4) gegenüberliegenden Außenseite (15) des Verkleidungsteils (10) eine Lackschicht aufgebracht ist.

7. Verkleidungsanordnung (9) nach einem der vorhergehenden Ansprüche,
**dadurch gekennzeichnet, dass**
der Linienzug, entlang dem die Durchgangsöffnungen (18) angeordnet sind, geschlossen ist, wobei der geschlossene Linienzug eine Form eines Kreises, einer Ellipse oder eines Rechtecks aufweist.

8. Verkleidungsanordnung (9) nach einem der vorhergehenden Ansprüche,
**dadurch gekennzeichnet, dass**
das Verkleidungsteil (10) aus einem Kunststoff und/oder einem Metall gebildet ist.

9. Kraftfahrzeug (1) mit einer Verkleidungsanordnung (9) nach einem der vorhergehenden Ansprüche.

10. Verfahren zum Herstellen einer Verkleidungsanordnung (9) für ein Kraftfahrzeug (1), bei welchem ein Verkleidungsteil (10) bereitgestellt wird, ein Ultraschallsensor (4) mit dem Verkleidungsteil (10) verbunden wird, wobei der Ultraschallsensor (4) dazu ausgelegt ist, ein Ultraschallsignal durch das Verkleidungsteil (10) hindurch auszusenden und/oder ein Ultraschallsignal durch das Verkleidungsteil (10) hindurch zu empfangen, und eine Dämpfungseinrichtung (16) zum Dämpfen einer Schwingung des Verkleidungsteils (10) bereitgestellt wird,
**dadurch gekennzeichnet, dass**
zum Bereitstellen der Dämpfungseinrichtung (16) eine Mehrzahl von Durchgangsöffnungen (18) in das Verkleidungsteil (10) eingebracht wird, welche entlang eines Linienzugs angeordnet sind und welche das Verkleidungsteil (10) in einen ersten Bereich (19), in welchem der Ultraschallsensor (4) angeordnet ist, und einen den ersten Bereich (19) umgebenden zweiten Bereich (20) einteilt.

11. Verfahren nach Anspruch 10,
**dadurch gekennzeichnet, dass**
vor dem Einbringen der Mehrzahl von Durchgangsöffnungen (18) eine Lackschicht auf eine dem Ultraschallsensor (4) gegenüberliegenden Außenseite (15) des Verkleidungsteils (10) aufgebracht wird.

12. Verfahren nach Anspruch 10,
**dadurch gekennzeichnet, dass**
nach dem Einbringen der Mehrzahl von Durchgangsöffnungen (18) eine Lackschicht auf eine dem Ultraschallsensor (4) gegenüberliegenden Außenseite (15) des Verkleidungsteils (10) aufgebracht wird.

13. Verfahren nach einem der Ansprüche 10 bis 12,
**dadurch gekennzeichnet, dass**
die Mehrzahl von Durchgangsöffnungen (18) mittels eines Lasers in das Verkleidungsteil (10) einbracht wird.
